# EUROPÄISCHE PATENTSCHRIFT

(11) **EP 1 602 543 B1**
(45) Veröffentlichungstag und Bekanntmachung des Hinweises auf die Patenterteilung: **11.02.2009**
(21) Anmeldenummer: 04013224.3
(22) Anmeldetag: 04.06.2004
(51) Int. Cl.: B60T 11/16, F15B 15/14

(54) **Hydraulikzylinder**
Master cylinder
Maître-cylindre

(43) Veröffentlichungstag der Anmeldung: 07.12.2005
(73) Patentinhaber: ZF Friedrichshafen AG, 88046 Friedrichshafen (DE)
(72) Erfinder: Ludsteck, Sven, 97702 Reichenbach (DE); Gebauer, Dieter, 97505 Geldersheim (DE); Tulaczko, Boleslaw, 97453 Schonungen (DE)

(56) Entgegenhaltungen:
- DE-A- 19 953 286
- FR-A- 1 335 901
- US-A- 4 945 729
- US-A1- 2003 172 651

## Beschreibung

Die Erfindung betrifft einen Hydraulikzylinder, insbesondere einen Geberzylinder, gemäß dem Oberbegriff des Patentanspruchs 1.

Ein solcher Hydraulikzylinder, wie dieser beispielsweise in der Automobiltechnik bei hydraulischen Kupplungs- oder Bremsbetätigungssystemen Anwendung findet, ist z.B. aus der DE 100 28 673 A1 bekannt.

Das Gehäuse des dort dargestellten Hydraulikzylinders weist an dessen Stirnseite einen Anschluß für eine Druckleitung und an dessen Mantelfläche einen Anschluß mit einem darin verlaufenden Nachlaufkanal zur Verbindung mit einem Nachlaufbehälter auf. An der dem Druckraum zugewandten Stirnseite des Zylinderkolbens ist eine separate, ringförmige Nachlaufeinrichtung angeordnet, an deren Außen- als auch an deren Innenumfangsfläche jeweils zwölf, axiale Nachlaufnuten (Schnüffeinuten) gleichmäßig verteilt sind, die gemeinsam mit dem Nachlaufkanal, einem Nachlaufbereich und einer im Zylinder angeordneten Primärdichtung zusammenwirken.

Wenn sich der Kolben in seiner ausgefahrenen Endstellung befindet, bei welcher der Druckraum sein maximales Volumen einnimmt, überbrücken die Nachlaufnuten die in dem Gehäuse befestigte und an dem Kolben anliegende Dichtung. Somit kann einerseits Hydraulikfluid aus dem Nachlaufbehälter in den Druckraum nachströmen und andererseits können in der Entlüftungsnut angesammelte Gasblasen durch den Nachlaufkanal entweichen. Wird der Kolben in Richtung des Druckraumes verlagert, so wird, solange die Fluidverbindung über die Nachlaufnuten geöffnet ist, aus dem Druckraum verdrängtes Fluid wieder in den Nachlaufkanal gefördert, wobei auch noch im Druckraum befindliche Gasblasen entweichen können. Hierdurch wird der Druckraum des Hydraulikzylinders bei jedem Hub selbständig entlüftet.

Zur Verbesserung des Entlüftungsverhaltens wurde in der DE 199 53 286 A1 ein Hydraulikzylinder mit am Kolben angeordneten Nachlaufnuten und einer am Zylindergehäuse längs innerhalb des Duckraumes ausgebildeten Entlüftungsnut vorgeschlagen, deren Nutgrund gegenüber einer Horizontalen der vorgesehenen Einbaulage des Zylinders zu dem Entlüftungs- oder Nachlaufkanal hin ansteigend gestaltet ist. Durch diese Gestaltung können sich im Druckraum befindliche Gasblasen in der geodätisch am höchsten angeordneten Entlüftungsnut sammeln und aus dem Bereich nahe der Endstellung des Kolbens einfach über den Entlüftungs- oder Nachlaufkanal abgeführt werden.

Nachteilig bei dem bekannten Hydraulikzylindern ist insgesamt, daß trotz der Mehrzahl von Ausgleichsnuten eine Entlüftung des Druckraums bei dem meist horizontal erfolgenden Einbau dennoch nur unzureichend ist. Dies führt dazu, daß ein Teil der in der Entlüftungsnut angesammelten Gase in dem Druckraum verbleibt und bei einer Betätigung des Kolbens unter einer Verkleinerung des Druckraums die verbleibenden Gasblasen komprimiert werden und somit einen unerwünscht großen Leerweg und eine Totzeit in das hydraulische Betätigungssystem einbringen.

Der Erfindung liegt das Problem zugrunde, einen Hydrauiikzyiinder der eingangs genannten Art so zu gestalten, daß er eine verbesserte Entgasung des Druckraums ermöglicht.

Dieses Problem wird durch einen gattungsgemäßen Hydraulikzylinder mit den kennzeichnenden Merkmalen des Patentanspruchs 1 gelöst.

Der Erfindung liegt die Erkenntnis zu Grunde, dass bei einem aus dem Stand der Technik bekannten Hydraulikzylinder mit mehreren am Umfang verteilten Ausgleichsnuten bei einer Kolbenbewegung unter einer Verkleinerung des Druckraumes das durch den Kolben verdrängte Fluid zwar durch die Ausgleichsnuten aus dem Druckraum austreten kann, jedoch bei einer von der Vertikalen abweichenden Einbaulage, bspw. bei einer etwa horizontalen Einbaulage des Zylinders das geodätisch oben in einem Gassammelbereich innerhalb des Druckraumes angesammelte Gas nur begrenzt über die am Kolben nächstliegenden Ausgleichsnuten abgeführt werden kann, da der auf das Gas wirkende hydrostatische Druck des Nachlauffluids dem dort vorherrschenden relativ geringen Gasdruck entgegen wirkt und so das vollständige Entweichen des Gases behindert. Das aus dem Druckraum austretende Fluid strömt demzufolge zum überwiegenden Teil über diejenigen Ausgleichsnuten aus, welche nicht an den Gassammelraum angrenzen.

Daraus haben die Erfinder abgeleitet, den auf das gesammelte Gas wirkenden Druck beim Einschieben des Kolbens zu erhöhen, indem die Nachlaufmittel am Kolben im Wesentlichen im Bereich eines Gassammelabschnitts ausgebildet werden. Das bedeutet, dass der Wirkungsquerschnitt der Nachlaufmittel im Bereich des Gassammelabschnittes zumindest größer ist, vorzugsweise jedoch um ein Mehrfaches gößer ist als ausserhalb dieses Bereiches. Da die Volumengestalt des bei einem Entlüftungsvorgang komprimiertes Gases einer gewissen Änderung unterliegt, erstreckt sich in einem Radialschnitt eines Hydraulikzylinders der Bereich des Gassammelabschnitts unmittelbar auf den Gassammelabschnitt selbst und auf einen in Umfangsrichtung daran angrenzenden nahen Bereich. Somit wird das durch den Kolben verdrängte Fluid bei geeigneter Dimensionierung der Nachlaufmittel gezwungen, den Druckraum hauptsächlich im Bereich des Gassammelabschnitts zu verlassen. Dadurch können sich der Fluid- und der Gasdruck innerhalb des Druckraumes kurzzeitig stark erhöhen, was gleichzeitig zu einem beträchtlichen Anstieg der Ausströmgeschwindigkeit von Gas und Fluid führt, wodurch Gase aus dem Druckraum effektiv ausgepresst und aus diesem entfernt werden können. Wesentlich ist, dass die Nachlaufmittel im Wesentlichen, d.h. der überwiegende Nachlaufquerschnitt am Gassammelabschnitt konzentriert ist, um den gewünschten Fluid-Durchfluß an dieser Stelle zu erzeugen.

Die Erfinder haben weiter erkannt, dass zur Sicherung einer direkten Strömungsverbindung zwischen dem Gassammelabschnitt und dem Nachlaufkanal ein Verdrehen des Kolbens bzw. der Nachlaufmittel aus dem Bereich des Gassammelabschnitts stark eingeschränkt werden muss. Denn selbst bei einer Vielzahl von am Kolbenumfang angeordneten Ausgleichsnuten, wie bspw. zwölf, ergibt sich ein relativ grosser Winkelabstand dieser Nuten, im Beispiel von 30°, so dass eine direkte Strömungsverbindung zu dem Gassammelraum nicht bei jeder Drehlage des Kolbens ermöglicht werden kann. Der Gassammelbeabschnitt konzentriert sich nämlich bei etwa horizontaler Gebrauchslage bspw. bei einem dem Stand der Technik entsprechenden hydraulischen Kupplungsbetätigungssystem auf einem sehr engen Sektor in einem Hydraulikzylinder.

Davon ausgehend wird vorgeschlagen, die Nachlaufmittel drehfest zu dem Gassammelabschnitt anzuordnen, was bspw. durch eine Führungsnut im Gehäuse und eine in diese eingreifende Nase am Kolben realisiert werden kann.

Die Erfindung verlässt damit den im Stand der Technik eingeschlagenen Weg, der vorsieht, möglichst viele Ausgleichsnuten am Kolben auszubilden und diese mit dem Kolben um dessen Längsachse im Wesentlichen frei drehbar im Hydraulikzylinder anzuordnen.

Mit dem erfindungsgemäßen Hydraulikzylinder werden beispielsweise durch Ausgasen des Hydraulikfluids oder durch Eintrag über einen Nehmerzylinder sich ansammelnde Gase besonders zuverlässig aus dem Druckraum abgeführt.

Gemäß Anspruch 2 sind die Nachlaufmittel als offene Ausgleichsnuten am Kolben ausgeführt sind, wodurch das an der höchsten Stelle des Druckraumes angesammelte Gas unmittelbar,d.h. im Wesentlichen ohne Umwege, durch die Nut bzw. Nuten abgeführt werden kann.

Besonders effektiv lässt sich eine Entlüftung erreichen, wenn gemäß Anspruch 3 lediglich eine einzige Ausgleichsnut am Kolben ausgeführt ist. Auf diese Weise wird das bei einer Kolbenbewegung verdrängte Fluid vollständig über die eine Nut abgeführt und kann Gasrückstände besonders effektiv beim Ausströmen mitreissen.

Eine weitere vorteilthafte Verbesserung der Entlüftung kann nach Anspruch 4 erzielt werden, indem der Gassammelabschnitt durch eine sich im Gehäuse längs des Druckraums erstreckende Entlüftungsnut gebildet und dadurch auf einen vorgegebenen Abschnitt des Druckraumes eingeengt wird. Bei einem in einem Kraftfahrzeug angeordneten Hydraulikzylinder können sich aufgrund betriebsbedingter Vibrationen die Gase selbstständig an die in Gebrauchslage des Zylinders geodätisch am höchsten innerhalb des Druckraumes angeordneten Bereich bewegen und sich dort konzentrieren.

Wenn, wie dieses Anspruch 5 vorsieht, der Boden der Entlüftungsnut gegenüber einer Horizontalen der vorgesehenen Einbaulage des Gehäuses zu dem Nachlaufkanal hin ansteigend gestaltet ist, stauen sich die Gasblasen in einem Axialbereich unmittelbar an der Primärdichtung an, wodurch der Austritt über die Nachlaufmittel nochmals erheblich erleichtert wird.

Eine Weiterbildung der Erfindung gemäß Anspruch 6 sieht vor, die Primärdichtung als Ringlippendichtung auszuführen, wobei deren offene Ringnut gegenüber der Entlüftungsnut mit einem Deckelement abgedeckt ist. Somit wird ein Übertritt und eine Ansammlung von Gasblasen in die bzw. der Ringnut vermieden und gleichzeitig sichergestellt, dass Gas ausschließlich über die Nachlaufmittel aus dem Druckraum ausgeleitet wird.

Für ein schnelles Ableiten von Gas ist es gemäß Anspruch 7 zweckmässig, die Nachlaufmittel auf einer im Wesentlichen gleichen Umfangslage wie den Nachlaufkanal anzuordnen.

In einer Weiterbildung der Erfindung ist nach Anspruch 8 vorgesehen, den Ausgleichskanal innerhalb eines räumlich begrenzten Nachlaufbereichs auszubilden und dazu auf der dem Druckraum abgewandten Seite eine zwischen dem Gehäuse oder dem Führungsrohr und dem Kolben wirkende Sekundärdichtung einzusetzen.

Die Erfindung wird nachfolgend unter Bezugnahme auf die beigefügte Figur anhand eines bevorzugten Ausführungsbeispiels an einem Geberzylinder für eine Kraftfahrzeugkupplung erläutert. Es zeigen:

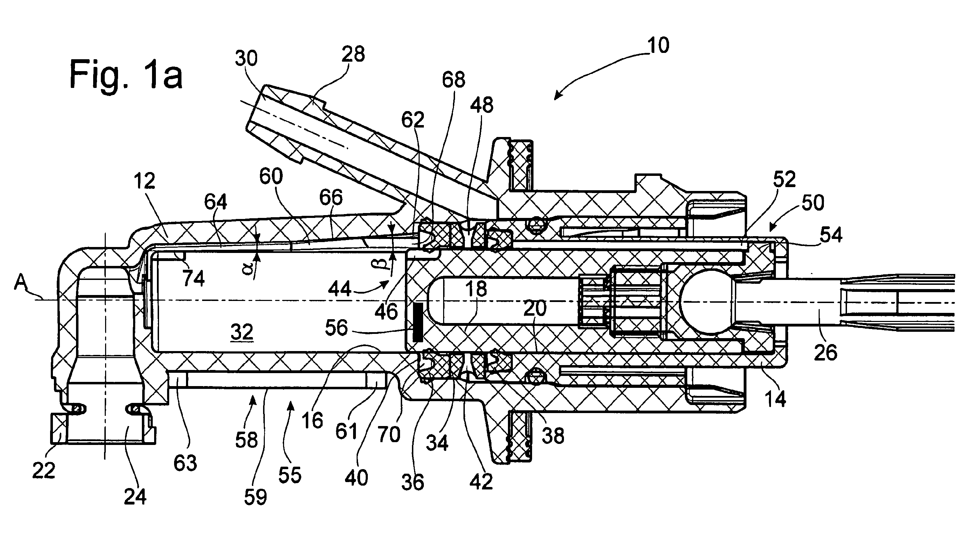

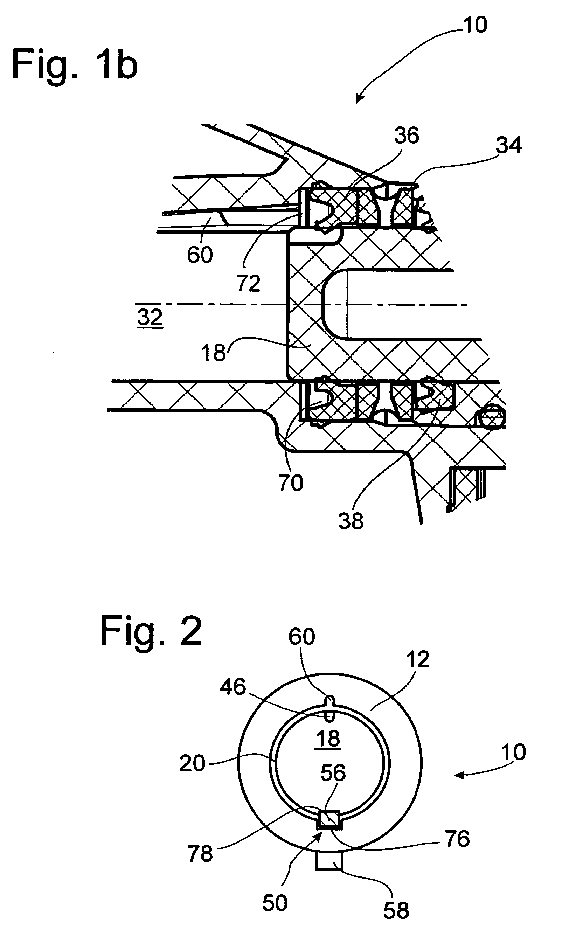

- Fig. 1 a: eine Axialschnittdarstellung eines Hydraulikzylinders mit einer Nachlaufeinrichtung,
- Fig. 1 b: ein Ausschnitt des Hydraulikzylinders der Fig. 1 a mit einer im Bereich der Primärdichtung angeordneten Ringscheibe,
- Fig.2: ein schematische Dartsellung der Anordnung eines Permanentmagneten an einem Kolben eines Nydraulikzyklinders in einem Radialschnitt,
- Fig. 3: eine weitere Anordnungsvariante eines Permanentmagneten an einem Kolben.

Die Fig.1 a zeigt eine Axialschnittdarstellung eines erfindungsgemäßen Hydraulikzylinders 10 mit einer Nachlaufeinrichtung, welcher als Geberzylinder für eine hydraulische Betätigungseinrichtung zur Betätigung einer Kraftfahrzeugkupplung ausgebildet ist. Der Geberzylinder 10 weist ein Kunststoff-Gehäuse 12 und ein, in einer Stufenbohrung angeordnetes, fest mit dem Gehäuse 12 verbundenes Führungsrohr 14 auf, welche eine gemeinsame Laufbuchse 16 für einen in dem Zylinder 10 axial beweglichen Kunststoff-Kolben 18 mit einer Lauffläche 20 bilden.

Das Gehäuse 12 umfasst an der Stirnseite einen Fluidanschluss 22 mit einem Fluidkanal 24, der über eine dort verbindbare Fluidleitung mit einem zeichnerisch nicht dargestellten Nehmerzylinder in Fluidverbindung steht. Der Kolben 18 des Geberzylinders 10 steht über eine schwenkbeweglich an diesem angeordnete Kolbenstange 26 mit einem nicht dargestellten Kupplungspedal in Wirkverbindung, bei dessen Betätigung sich der Kolben 26 in der Figur nach links verschiebt und über die Fluidverbindung den Nehmerzylinder und eine mit diesen verbundene Kupplungsgabel zum Ausrücken der Fahrzeugkupplung steuert.

Von der Mantelfläche des Gehäuses steht ein Nachlaufanschluss 28 ab, der mit einem darin ausgeführten Nachlaufkanal 30 mit einem nicht dargestellten Fluid-Nachlaufbehälter kommuniziert.

Die Stirnseite des Kolbens 18 und die Innenwandung des Zylindergehäuses 12 definieren einen variablen Druckraum 32, welcher gegenüber dem beweglichen Kolben 18 gegen die Umgebung abgedichtet ist. Dazu sind am Gehäuse 12 zwei, durch einen Zwischenring 34 beabstandete Ringlippendichtungen 36, 38 angeordnet, die jeweils mit einer Dichtlippe am Gehäuse 12 und mit einer zweiten Dichtlippe an der Lauffläche 20 des Kolbens 18 anliegen. Die axial zwischen dem Nachlaufkanal 30 und dem Druckraum 32, an einem Gehäuseabsatz 40 anliegende erste Dichtung (Primärdichtung 36) dichtet den Druckraum 32 gegenüber einen durch den Zwischenring 34 gebildeten ringförmigen Nachlaufbereich 42 ab. Die zweite, am Ende des Führungsrohres 14 befindliche Ringlippendichtung (Sekundärdichtung 38) dient der dichten Abtrennung des Nachlaufbereichs 42 von der Atmosphäre. Alternativ kann die Sekundärdichtung 28 auch im Gehäuse angeordnet werden.

Um ein Nachlaufen von Hydraulikflüssigkeit in und das Entweichen von Gasblasen aus dem Druckraum 32 sicherzustellen, weist der Geberzylinder 10 eine Nachlaufeinrichtung 44 auf. Zu diesem Zweck sind an der Kolbenlauffläche 20 Nachlaufmittel 46 in Form einer sich von dessen Stirnseite aus in axialer Richtung erstreckenden offenen Ausgleichs- bzw. Nachlaufnuten angeordnet. Die Erstreckung ist so gewählt, dass die Primärdichtung 36 in der dargestellten Endstellung des Kolbens 18 überbrückt wird und ein Ausgleichskanal 48 vom Druckraum 32 ausgehend über die Nachlaufnut 46 zum Nachlaufbereich 42 und weiter zum Nachlaufkanal 30 freigegeben wird. Die Fluidverbindung zwischen dem Nachlaufbereich 42 und dem Nachlaufkanal 30 sowie dem Druckraum 32 wird durch in der Figur verdeckte Kanäle im Zwischenring 34 sichergestellt. Bei einer Bewegung des Kolbens 18 in die den Druckraum 32 verkieinernde Richtung wird die Nachlaufnut 46 aus dem Bereich der Primärdichtung 36 herausbewegt, wodurch sich die Primärdichtung 36 vollständig an die Kolbenlauffläche 20 anlegt und damit die Verbindung zwischen dem Druckraum 32 und dem Nachlaufkanal 30 unterbricht. Anstelle einer offen Nut 46 können die Nachlaufmittel 46 auch an der gezeigten Position als geschlossene Nut, d.h. im wesentlichen als Axialbohrung ausgeführt werden, welche mit einer nach radial aussen geführten seitlichen Bohrung, d.h. einem Stichkanal verbunden ist. Der Stichkanal mündet in der in Fig. 1 a gezeigten Kolbenstellung unmittelbar hinter der mit dem Kolben 18 zusammenwirkenden Dichtlippe der Primärdichtung 36 in den Nachlaufbereich 42.

Wie aus der Fig.1a ersichtlich, ist die Nachlaufnut 46 am Kolben 18 auf einer im Wesentlichen gleichen Umfangslage bezüglich des Gehäuses 12 wie der in den Nachlaufbereich 42 mündende Nachlaufkanal 30 angeordnet, so dass der Ausgleichskanal 48 im Nachlaufbereich 42 möglichst kurz bemessen ist.

Zur Beibehaltung der gegenseitigen Drehlage der Nachlaufmittel, d.h. der Ausgleichsnut 46 und dem Gehäuse 12 weist der Geberzylinder 10 eine Verdrehsicherung 50 mit einer axialen Führungsnut 52 im Führungsrohr 14 und einer in diese eingreifende und axial von dieser geführten Nase 24 am Kolben 18 auf.

In der oberen Wandung des Druckraums ist zur weiteren Unterstützung der Entlüftung eine optionale Entlüftungsnut 60 angeordnet, welche einen dem Nachlaufkanal 30 nahen Abschnitt 62 und einen dem Nachlaufkanal 30 fernen Abschnitt 64 aufweist. Der dem Nachlaufkanal 30 ferne Abschnitt 64 hat einen gegenüber der Horizontalen um einen Winkel α von 1,5° zu dem Nachlaufkanal 30 hin ansteigenden Nutgrund 66. Der dem Nachlaufkanal 30 nahe Abschnitt 62 weist einen zu diesem um den Winkel β, der etwa 5° beträgt, gegenüber der Horizontalen ansteigenden Nutgrund 66 auf und erstreckt sich ungefähr über ein Drittel der Länge des Druckraums 32. Insbesondere der dem Nachlaufkanal 30 nahe Abschnitt 62 bildet innerhalb des Druckraums 32 einen Sammelabschnitt 68 für Gasblasen, welche sich unmittelbar vor der Primärdichtung 36 ansammeln und in der eingezeichneten Stellung des Kolbens 18, in der sich die Nachlaufnut 46 im Bereich der Primärdichtung 36 befindet, über die Nachlaufnut 46 und den Nachlaufkanal 30 entweichen können.

Bei einem Unterdruck im Druckraum 32 strömt über die Nachlaufnut 46 zudem Hydraulikfluid in diesen nach. Vorteilhafterweise entspricht der Querschnitt der Nachlaufnut 46 mindestens dem Querschnitt der Entlüftungsnut 60 im Bereich der Primärdichtung 36. Damit wird bei relativ großen Gasansammlungen eine Aufstauung an dem Ausgleichskanal 48 bei einem Entlüftungsvorgang vermieden.

Zur Vermeidung eines Übertritts von Restgas aus dem Druckraum 32 in die von den Dichtlippen der Primärdichtung 36 aufgespannte Ringnut 70 kann ein zusätzliches Deckelement 72, bspw. eine Ringscheibe 72 zur Abdeckung der Ringnut 70 eingebracht werden, wie dieses in dem Ausschnitt der Fig. 1b gezeigt ist. Die Ringscheibe 72 wird dazu zwischen der Primärdichtung 36 und dem Absatz 40 zentriert von dem Gehäuse 12 aufgenommen, wobei deren Innendurchmesser so bemessen ist, dass die Lauffläche 20 des Kolbens 18 berührungsfrei vorbeigleiten kann.

Der Hydraulikzylinder 10 ist zum Einbau in einer horizontalen Lage vorgesehen. Hierbei entspricht die Mittelachse A des Hydraulikzylinders 10 der Horizontalen. Der Hydraulikzylinder 10 kann auch mit seinem Anschluß 22 für die Druckleitung nach oben hin um einen gegenüber dem Winkel α kleineren oder gleich großen Winkel zur Horizontalen geneigt angeordnet werden.

Alternativ zu der Ausbildung einer einzigen Nachlaufnut 46 kann der Kolben 18 auch mehrere derartiger Nuten 46 aufweisen. Die eine oder mehreren Nachlaufnuten 46 sind vorzugsweise am Kolben 18 am geodätisch höchsten Bereich und benachbart zum Gassammelabschnitt 68 ausgebildet. Bei der in der Figur dargestellten horizontalen Lage sind die Nachlaufnuten 46 in der oberen Halbebene des Kolbens 18, und besonders bevorzugt nahe zum Nachlaufkanal 30 und günstigerweise ebenso im Bereich der Entlüftungsnut 60 positioniert.

Zusätzlich können auch eine oder mehrere Ausgleichsnuten 46 ausserhalb des mit dem Gassammelabschnitt 68 zusammenwirkenden Kolbenbereichs ausgebildet werden. Jedoch sind die Ausgleichsnuten 46 insgesamt so anzuordnen und zu dimensionieren, dass sich bei einer Entlüftung die unten beschriebene Wirkung einstellen kann.

Bei einem Entlüftungsvorgang mit einer Kolbenbewegung in den Druckraum 32 hinein wird beim Vorhandensein einer Gasansammlung in der Entlüftungsnut 60 oder wenn diese nicht ausgebildet ist im geodätisch oberen Volumenbereich des Druckraumes 32 Fluid verdrängt und hat dort einen ansteigenden Fluidpegel zur Folge, da das Fluid über die ggf. ausserhalb des Gassammelabschnittes 68 angeordneten Ausgleichsnuten nur ungenügend schnell aus dem Druckraum entweichen kann. In Folge werden die im Gassammelabschnitt 68 vorhandenen Gase zunächst komprimiert und anschließend über die zu diesem unmittelbar benachbarten, d.h. in diesem Zustand in direkter Strömungsverbindung stehenden Nachlaufmitteln 46 mit dem überschüssigen, verdrängten Fluid aus dem Druckraum 32 geschoben bzw. herausgepresst.

Zur Erzielung einer möglichst vollständigen Entgasung des Druckraumes 32 ist es von besonderer Bedeutung, die Strömungsgeschwindigkeit des Fluids in der oder den Ausgleichsnuten 46 möglichst hoch einzustellen, was bei einem vorgegebenen Kolbenquerschnitt durch eine geeignete Wahl des Nutquerschnitts in Verbindung mit der Nutanzahl einfach erfolgen kann.

Am stirnseitigen Ende des Druckraums 32 kann zusätzlich ein kurzer, sich axial erstreckender Steg 74 ausgebildet sein, der bei Erreichen der eingeschobenen Endposition des Kolbens 18 dort formschlüssig in die Ausgleichsnut 46 eingreift und sich in der Ausgleichsnut aufstauende, jedoch nach dem Passieren der Primärdichtung 36 nicht mehr über diese abführbare Gasansammlungen aus der Nut 46 verdrängt, worauf sich diese in die Entlüftungsnut 60 ausweichen und in dieser in Richtung der Primärdichtung 36 nach oben ansteigen können, um bei einem nächsten Entlüftungsvorgang aus dem Druckraum 32 zu entweichen.

Der Hydraulikzylinder 10 umfasst gemäß Fig. 1 a ein Sensorsystem 55 zur Detektion einer Kolbenstellung, wobei am Kolben 18 ein stabförmiger Permanentmagnet 56 und an der Außenseite des Gehäuses 12 oder alternativ an der Führungshülse 14 eine Detektoreinheit 58 zur Erfassung einer von dem Permanentmagnet 56 induzierten Magnetfeldänderung angeordnet sind.

Die Detektoreinheit 58 umfasst ein Sensorgehäuse 59, in dem zwei magnetfeldempfindliche Sensoren 61, 63, z.B. Hall-Sensoren oder Reed-Kontakte enthalten sind. Alternativ können auch kontinuierlich arbeitende kapazitive oder induktive Wegaufnehmer als Sensoren eingesetzt werden. Die axiale Positionierung des Permanentmagneten 56 am Kolben 18 ist prinzipiell frei wählbar, jedoch ist an der dargestellten Position der axiale Abstand des Magneten 56 zum Druckraum 32 minimiert, wodurch sich ein konstruktiver Vorteil bei der Positionierung der Sensoren 61, 63 und des Sensorgehäuses 59 ergibt, welches platzsparend im vorderen Bereich des Zylindergehäuses 12 und somit unmittelbar axial im Bereich des Druckraumes 32 ausgebildet werden kann. Der Permanentmagnet 56 und die Sensoren 61, 63 befinden sich im Wesentlichen auf derselben Umfangslage. Vorteilhafterweise ist der Magnet 56 mit einem seiner beiden Magnetpole auf die Sensoren 61, 63 ausgerichtet, damit diese von dem dort besonders stark ausgeprägten Magnetfeld beaufschlagt werden können.

Der axiale Abstand der Sensoren 61, 63 entspricht dabei etwa einer Anfangs- und einer Endstellung des Kolbens 18. In Fig. 1a befindet sich der Kolben 18 zwar axial abseits der Position des Sensors 61, jedoch noch innerhalb dessen Erfassungsbereiches. Bei einer Axialbewegung des Kolbens 18 in dessen Laufbuchse 16 wird der jeweils axial dem Permanentmagneten 56 nächstliegende Sensor 24 bzw. 26 von dessen Magnetfeld erfasst und kann daraufhin eine Schaltbewegung ausführen und/oder erzeugt ein elektrisches Signal, welches über eine nicht dargestellte Signalleitung an eine Auswerteeinheit zur weiteren Bearbeitung weitergeleitet wird. Es können auch beide Sensoren 61, 63 gleichzeitig mit dem Magnetfeld des Permanentmagneten 56 beaufschlagt werden, wobei aus dem jeweils resultierenden Signalverhältnis der Sensoren 61, 63 die Position des Kolbens 18 ermittelt werden kann.

In den verdrehsicher in der Laufbuchse 16 geführten Kolben 18 ist, wie in der Figur zu erkennen, asymmetrisch zur Kolben- und zur Zylindermittellinie A der Permanentmagnet 56 eingesetzt, der zumindest im Bereich der Kolbenlauffläche 20 vollständig vom Kunststoffmaterial des Kolbens 18 umgeben ist. Somit ist der Magnet 56 einerseits gegen Korrosionserscheinungen sicher geschützt, andererseits wird die Lauffläche 20 des Kolbens 18 nicht unterbrochen, was einen verschleißarmen, langlebigen Betrieb des Hydraulikzylinders 10 garantiert.

Zur Anordnung des Permanentmagneten 56 im Hydraulikzylinder 10 kann die Verdrehsicherung 50 alternativ unter dessen Mitwirkung selbst ausgeführt werden, wie dieses in Fig. 2 dargestellt ist. Dazu ist der Magnet 56 so in den Kolben 18 eingesetzt, dass dieser radial etwas über die Kolbenlauffläche 20 heraussteht. Der überstehende Bereich des Magneten 56 greift in eine am Druckraum 32 ausgebildete Axialnut 76 ein und wird von dieser verdrehsicher gehalten. Beispielsweise genügt es, an der Lauffläche 20 eine Ausnehmung 78 als Aufnahmebereich 78 vorzusehen und einen scheibenförmigen Permanentmagneten 56 in diese einzusetzen. Da dieser in der Nut 76 geführt wird, ist im montierten Zustand des Zylinders 10 gleichzeitig eine verliersichere Anordnung gegeben, d.h. der Permanetmagnet 56 braucht in der Ausnehmung 78 nur zum Zweck seiner Montage fixiert werden. Jedoch sollte ein Axialspiel zwischen dem Magnet 56 und dessen Aufnahmebereich 78 vermieden werden, da dieses einer exakten Stellungsdetektion des Kolbens 18 entgegensteht.

Die erläuterte Variante hat den Vorteil, dass die Nase 54 am Kolben entfallen kann und dass der Permanentmagnet 56 wesentlich näher an der Detektoreinheit 58 geführt werden kann, als dieses bisher bekannt ist. Daraus ergibt sich der weitere Vorteil, dass weniger massiv ausgeführt werden kann und gleichzeitig die Detektoreinheit 58 eine geringere Ansprechempfindlichkeit aufweisen kann.

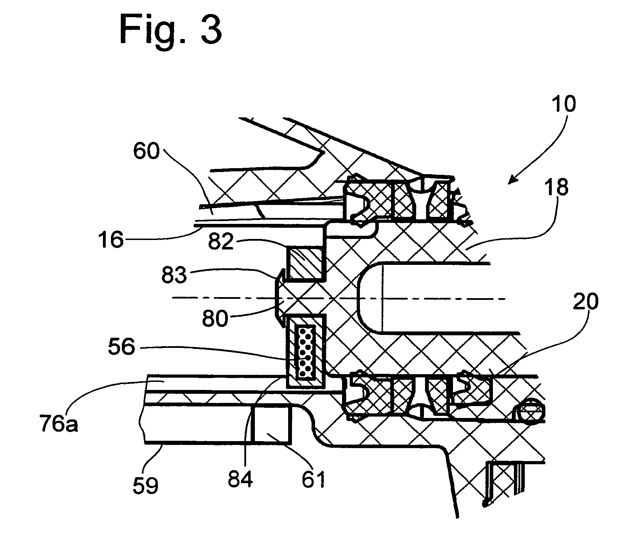

Alternativ kann der Permanentmagnet 56, wie in dem Ausschnitt der Fig. 3 dargestellt, auch an einem zum Druckraum 32 am Kolben 18 ausgebildeten Axialfortsatz 80 angeordnet sein. Auf dem Axialfortsatz 80 ist ein vorzugsweise aus Kunststoff gefertigtes Aufnahmeelement 82 drehfrei, jedoch axial fixiert gelagert. Dazu kann das Aufnahmelement 82 mittels einer Einweg-Rastvorrichtung, einer Schnappverbindung oder eines anderen Sicherungsmittels 83 am Kolben 18 axial möglichst spielfrei und unlösbar gesichert sein. Das Aufnahmeelement 82 weist eine radial abstehende und die Lauffläche 20 des Kolbens 18 überragende Nase 84 bzw. Zapfen auf, die in eine Axialnut 76a eingreifen kann, welche zu der Entlüftungsnut 60 am Druckraum 32 gegenüberliegend ausgebildet ist. Der Magnet 56 ist vorzugsweise in das Aufnahmelement 82 eingegossen, wobei alternativ auch andere Befestigungsmethoden, wie zum Beispiel das Einlassen, Einschnappen oder Einpressen in eine Ausnehmung wie in Fig. 2 gezeigt, eine Rastverbindung oder ähnliches möglich sind.

Bei dieser Variante bleibt die feie Drehbarkeit des Kolbens 18, sofern diese nicht anderweitig eingeschränkt ist, erhalten und lediglich das Aufnahmeelement 82 mit dem Magnet 56 sind verdrehgesichert zum Gehäuse 12 und damit zu den Sensoren 61, 63 festgelegt.

Als Werkstoff für den Permanentmagneten 56 eignet sich besonders gut eine Legierung des Materialsystems Eisen-Neodym-Bor (FeNdB), mit der eine besonders hohe magnetische Flußdichte darstellbar ist. Befindet sich der Magnetwerkstoff mit dem Fluid in unmittelbaren Kontakt, so empfiehlt sich das Aufbringen einer Oberflächenkorrosionsschutzschicht, bspw. eines Nickelüberzugs.

Durch die asymmetrische Anordnung des Permanentmagneten 56 kann die Detektoreinheit 58 insgesamt sehr kompakt und kostengünstig dargestellt und eine erhebliche Menge von kostenintensiven Magnetmaterial eingespart werden.

### Bezugszeichenliste

- 10: Hydraulikzylinder
- 12: Zylindergehäuse
- 14: Führungsrohr
- 16: Laufbuchse
- 18: Kolben
- 20: Lauffläche
- 22: Fluidanschluß
- 24: Fluidkanal
- 26: Kolbenstange
- 28: Nachlaufanschluß
- 30: Nachlaufkanal
- 32: Druckraum
- 34: Zwischenring
- 36: Primärdichtung
- 38: Sekundärdichtung
- 40: Gehäuseabsatz
- 42: Nachlaufbereich
- 44: Nachlaufeinrichtung
- 46: Nachlaufmittel
- 48: Ausgleichskanal
- 50: Verdrehsicherung
- 52: Führungsnut
- 54: Nase
- 55: Sensorsystem
- 56: Permanentmagnet
- 58: Detektoreinheit
- 59: Sensorgehäuse
- 60: Entlüftungsnut
- 61, 63: Sensoren
- 62: naher Abschnitt
- 64: ferner Abschnitt
- 66: Nutgrund
- 68: Gassammelabschnitt
- 70: Ringnut
- 72: Ringscheibe
- 74: Axialsteg
- 76, 76a: Axialnut
- 78: Aufnahmebereich
- 80: Axialfortsatz
- 82: Aufnahmeelement
- 83: Sicherungsmittel
- 84: Zapfen

## Patentansprüche

1. Hydraulikzylinder für ein hydraulisches System, insbesondere Geberzylinder für eine hydraulische Betätigungseinrichtung zum Betätigen einer Fahrzeugkupplung, umfassend:
- ein Gehäuse (12) mit einem Fluidanschluß (22) zur Verbindung mit dem hydraulischen System und mit einem Nachlaufanschluß (28), der über einen Nachlaufkanal (30) mit einem Fluid-Nachlaufbehälter verbunden oder verbindbar ist,
- einen in dem Gehäuse (12) längsverschieblich geführten Kolben (18), der einen variablen Druckraum (32) begrenzt,
- eine im Gehäuse (12) angeordnete Primärdichtung (36), die den Druckraum (32) gegenüber dem Atmosphärendruck abdichtet, und
- am Kolben (18) befindliche Nachlaufmittel (46) zur Herstellung eines Ausgleichskanals (48) zwischen dem Druckraum (32) und dem Nachlaufkanal (30) in einer ausgefahrenen Endstellung des Kolbens (18), in der die Primärdichtung (36) überbrückt wird,
**dadurch gekennzeichnet,**
**daß** die Nachlaufmittel (46) am Kolben (18) im Wesentlichen im Bereich eines im Druckraum befindlichen Gassammeiabschnitts (68) ausgebildet und drehfest zu diesem angeordnet sind.

2. Hydraulikzylinder nach Anspruch 1,
**dadurch gekennzeichnet,**
**dass** die Nachlaufmittel (46) als offene Ausgleichsnuten am Kolben (18) ausgeführt sind.

3. Hydraulikzylinder nach Anspruch 2
**dadurch gekennzeichnet,**
**dass** eine einzige Ausgleichsnut (46) ausgeführt ist.

4. Hydraulikzylinder nach einem der vorhergehenen Ansprüche,
**dadurch gekennzeichnet,**
**dass** der Gassammelabschnitt (68) durch eine sich im Gehäuse (12) längs des Druckraums (32) erstreckende Entlüftungsnut (60) gebildet wird.

5. Hydraulikzylinder nach Anspruch 4,
**dadurch gekennzeichnet,**
**dass** der Grund (66) der Entlüftungsnut (60) gegenüber einer Horizontalen der vorgesehenen Einbaulage des Gehäuses (12) zu dem Nachlaufkanal (30) hin ansteigend gestaltet ist.

6. Hydraulikzylinder nach einem der vorhergehenen Ansprüche,
**dadurch gekennzeichnet,**
**dass** die Primärdichtung (36) als Ringlippendichtung ausgeführt ist, deren Ringnut (70) gegenüber der Entlüftungsnut (60) mit einem Deckelement (72) abgedeckt ist.

7. Hydraulikzylinder nach einem der vorhergehenen Ansprüche,
**dadurch gekennzeichnet,**
**dass** die Nachlaufmittel (46) auf einer im Wesentlichen gleichen Umfangslage wie der Nachlaufkanal (30) angeordnet sind.

8. Hydraulikzylinder nach einem der vorhergehenden Ansprüche,
**dadurch gekennzeichnet,**
**dass** der Ausgleichskanal (48) innerhalb eines Nachlaufbereichs (42) ausgebildet ist, welcher auf der dem Druckraum (32) abgewandten Seite von einer zwischen dem Gehäuse (12) oder einem mit diesem verbundenen Führungsrohr (14) und dem Kolben (18) angeordneten Sekundärdichtung (38) begrenzt wird.

## Claims

1. Hydraulic cylinder for a hydraulic system, in particular master cylinder for a hydraulic actuating device for actuating a vehicle clutch, comprising:
- a housing (12) having a fluid connection (22) for connection to the hydraulic system, and having an overrun connection (28) which is connected or can be connected via an overrun channel (30) to a fluid overrun container,
- a piston (18) which is guided longitudinally displaceably in the housing (12) and delimits a variable pressure chamber (32),
- a primary seal (36) which is arranged in the housing (12) and seals the pressure chamber (32) with respect to atmospheric pressure, and
- overrun means (46) which are situated on the piston (18) for producing an equalization channel (48) between the pressure chamber (32) and the overrun channel (30) in an extended end position of the piston (18), in which end position the primary seal (36) is bridged,
**characterized in that** the overrun means (46) on the piston (18) are configured substantially in the region of a gas collecting section (68) which is situated in the pressure chamber and are arranged in a rotationally fixed manner with respect to the said gas collecting section (68).

2. Hydraulic cylinder according to Claim 1, **characterized in that** the overrun means (46) are configured as open equalization grooves on the piston (18).

3. Hydraulic cylinder according to Claim 2, **characterized in that** a single equalization groove (46) is configured.

4. Hydraulic cylinder according to one of the preceding claims, **characterized in that** the gas collecting section (68) is formed by a venting groove (60) which extends in the housing (12) along the pressure chamber (32).

5. Hydraulic cylinder according to Claim 4, **characterized in that** the bottom (66) of the venting groove (60) is designed so as to rise towards the overrun channel (30) with respect to a horizontal of the provided installation position of the housing (12).

6. Hydraulic cylinder according to one of the preceding claims, **characterized in that** the primary seal (36) is configured as an annular lip seal, the annular groove (70) of which is covered with a cover element (72) with respect to the venting groove (60).

7. Hydraulic cylinder according to one of the preceding claims, **characterized in that** the overrun means (46) are arranged on a substantially identical circumferential position to the overrun channel (30).

8. Hydraulic cylinder according to one of the preceding claims, **characterized in that** the equalization channel (48) is configured within an overrun region (42) which is delimited on the side which faces away from the pressure chamber (32) by a secondary seal (38) which is arranged between the piston (18) and the housing (12) or a guide pipe (14) which is connected to the said housing (12).

## Revendications

1. Vérin hydraulique pour un système hydraulique, notamment maître-cylindre pour un dispositif d'actionnement hydraulique pour actionner un embrayage de véhicule, comprenant :
un carter (12) doté d'un raccordement de fluide (22) à relier au système hydraulique et à un raccord de chasse (28) étant relié ou pouvant être relié à un réservoir de chasse de fluide par l'intermédiaire d'un canal de chasse (30) ;
un piston (18) guidé dans le carter (12) dans le sens de la longueur qui délimite une chambre de pression (32) variable ;
un joint d'étanchéité principal (36) disposé dans le carter (12) qui rend étanche la chambre de pression (32) par rapport à la pression atmosphérique ; et
des moyens de chasse (46) se trouvant au niveau du piston (18) pour réaliser un canal de compensation (48) entre la chambre de pression (32) et le canal de chasse (30) dans une position finale sortie du piston (18) dans laquelle le joint d'étanchéité principal (36) est franchi ;
**caractérisé en ce que** les moyens de chasse (46) sont réalisés au niveau du piston (18) pour l'essentiel dans la zone d'un segment de collecte de gaz (68) se trouvant dans la chambre de pression et sont disposés fixement par rapport à celui-ci.

2. Vérin hydraulique selon la revendication 1, **caractérisé en ce que** les moyens de chasse (46) prennent la forme de rainures de compensation au niveau du piston (18).

3. Vérin hydraulique selon la revendication 2, **caractérisé en ce qu'**une rainure de compensation (46) unique est réalisée.

4. Vérin hydraulique selon l'une quelconque des revendications précédentes, **caractérisé en ce que** le segment de collecte de gaz (68) est formé par une rainure de ventilation (60) s'étendant dans le carter (12) le long de la chambre de pression (32).

5. Vérin hydraulique selon la revendication 4, **caractérisé en ce que** le fond (66) de la rainure de ventilation (60) est réalisé de façon à monter en direction du canal de chasse (30) par rapport à une horizontale de la position de montage prévue du carter (12).

6. Vérin hydraulique selon l'une quelconque des revendications précédentes, **caractérisé en ce que** le joint d'étanchéité principal (36) prend la forme d'un joint d'étanchéité à lèvre annulaire dont la rainure annulaire (70) est recouverte par un élément couvrant (72) par rapport à la rainure de ventilation (60).

7. Vérin hydraulique selon l'une quelconque des revendications précédentes, **caractérisé en ce que** les moyens de chasse (46) sont disposés dans une position périphérique pour l'essentiel identique au canal de chasse (30).

8. Vérin hydraulique selon l'une quelconque des revendications précédentes, **caractérisé en ce que** le canal de compensation (48) est réalisé à l'intérieur d'une zone de chasse (42) qui est délimitée sur le côté opposé à la chambre de pression (32) par un joint d'étanchéité secondaire (38) disposé entre le carter (12) ou un tube de guidage (14) relié à celui-ci et le piston (18).
